# EUROPEAN PATENT APPLICATION

(11) **EP 2 737 940 A2**
(43) Date of publication of application: **04.06.2014**
(21) Application number: 13194727.7
(22) Date of filing: 27.11.2013
(51) Int. Cl.: B01J 13/00

(54) **Method for producing alumina-crystal-particle-dispersed alumina sol, alumina-crystal-particle-dispersed alumina sol obtained by the method, and aluminum coated member produced using the sol**

(30) Priority: 29.11.2012 JP 2012260759
(71) Applicant: Hitachi, Ltd., Tokyo 100-8280 (JP)
(72) Inventor: Yasuda, Yusuke, Tokyo, 100-8280 (JP); Morita, Toshiaki, Tokyo, 100-8280 (JP); Kobayashi, Yoshio, Ibaraki, 316-8511 (JP); Inoue, Kazuhiro, Ibaraki, 316-8511 (JP); Hama, Masachika, Ibaraki, 316-8511 (JP)
(74) Representative: Beetz & Partner

(57) **Abstract**

An aluminum salt is dissolved into water as a solvent to prepare an aqueous solution of the aluminum salt. Urea is added to the aqueous solution of the aluminum salt to be dissolved into the solution. The solution is heated to produce a precipitation of aluminum hydroxide. A deflocculant is added to deflocculate the precipitation. Thus, a sol is produced which contains colloidal particles of aluminum hydroxide and crystalline particles of aluminum oxide. An even and dense alumina thin film can be produced by using the sol on a surface of a substrate made of a metal having a low melting point, such as copper or aluminum.

## Description

### TECHNICAL FIELD:

The present invention relates to a method for producing an alumina-crystal-particle-dispersed alumina sol that can be crystallized at low temperature, an alumina-crystal-particle-dispersed alumina sol obtained by the method, and an aluminum coated member produced using the sol.

### BACKGROUND ART:

In recent years, in accordance with requests to semiconductor devices for a decrease in the size thereof, and an increase in the density thereof, an electric current of several amperes or more has come to flow in their interconnection layers or joint layers so that heat has been largely generated, particularly, in their semiconductor elements for switching. It is necessary to make their joint structures simpler in order to release the heat effectively to the outside of the semiconductor devices. Furthermore, it is desired to develop a member usable in higher-temperature environments in order to use highly efficient SiC.

As an insulating substrate for semiconductor devices, a ceramic substrate made of AlN or SiN is mainly used at present from the viewpoint of a high reliability thereof.

As a method for making a joint layer of a semiconductor device simpler, there is known a method of using an insulating resin sheet. Since the insulating resin sheet is bondable onto a surface of a metal substrate without using solder or the like, the use of any soldering material can be saved. This matter results in an advantage that the semiconductor device is made simple in structure and improved in heat radiating property.

However, the insulating resin sheet is low in heat resistance since the sheet is made of resin. Thus, a material high in heat resistance is desired. As such a material, a ceramic material high in heat resistance is promising. However, the firing temperature of alumina which is used in an insulating layer is from 1200 to 1700°C to be higher than the melting points of copper and aluminum used for metal substrates, which are 1083°C and 660°C, respectively. It is therefore difficult to form alumina directly onto a surface of a metal substrate.

As a method for solving the problem, some reports have been made about a method of forming a ceramic material onto a surface of a metal substrate at low temperature.

For example, JP 2008-81775 A (Patent Document 1) discloses an aerosol deposition method (hereinafter referred to also as the "AD method"). In the method, an aerosol in which ceramic fine particles are dispersed in a gas is sprayed from a nozzle to a substrate so as to be caused to collide with the substrate. Using the resultant collision energy, a ceramic film large in adhesive property is formed. However, even the use of the method does not make it easy to form an even and dense film. When the formed film is low in denseness so that the film has, for example, pores, regions around the pores are remarkably lowered in pressure resistance. Thus, the regions become a leakage path. Thus, insulating layers of any electronic device are required to have film-denseness. Additionally, the AD method is unsuitable for increasing the insulating layers in area since the layers are formed by scanning.

Nobuyuki Yamachi, "The Journal of Aluminum Finishing Society of Kinki", No. 152 (1991. 11), pp. 20-26 (Non-Patent Document 1) describes a method of using a thermally sprayed film to form an insulating film. However, according to the method also, porous regions are generated. Thus, it is difficult to form an even film.

One method for forming an even ceramic film is the so-gel method. In the case of, for example, alumina, it is necessary to convert the raw material thereof into a γ type or α type crystal in order that the resultant film can ensure sufficient pressure resistance and other properties. However, Y. Kobayashi et al., J. Mater. Sci., 40 (2005) 263-283 (Non-Patent Document 2) states that the crystallization temperature for the conversion into the α type is about 1100°C and that for the conversion into the γ type is 800°C or higher. The temperatures are each high.

According to the sol-gel method in the prior art, it is difficult that the resultant ceramic material is used as an insulating film since the crystallization temperature for the conversion into the α type of alumina is about 1100°C, which is higher than the melting point of aluminum. M. Kumagai et al., J. Am. Ceram. Soc., 68 (1985) 500-505 (Non-Patent Document 3) describes a method of using α alumina crystal particles as a seed material in order to lower the crystallization temperature.

### SUMMARY OF THE INVENTION:

Even when the method described in Non-Patent Document 3 is used, the crystallization temperature for the conversion into the α type is 1050°C, which is still high. Thus, it is difficult to form an alumina thin film onto a surface of a member made of copper, aluminum or the like.

In light of the above-mentioned problems, an object of the present invention is to provide an alumina sol capable of producing an even and dense alumina thin film on a surface of a substrate made of a metal having a low melting point, such as copper or aluminum, and a method for forming the sol.

A method for producing an alumina-crystal-particle-dispersed alumina sol of the present invention is a method for producing a sol including colloidal particles of aluminum hydroxide, and crystalline particles of aluminum oxide, the method including the steps of: dissolving an aluminum salt into water as a solvent to prepare an aqueous solution of the aluminum salt; adding urea to the aqueous solution of the aluminum salt to be dissolved into the solution; heating the solution to produce a precipitation of aluminum hydroxide; and deflocculating the precipitation by adding a deflocculant thereto.

According to the invention, a crystallization temperature of an alumina thin film obtained by use of the sol-gel method can be adjusted to 900°C or lower. Furthermore, according to the invention, an aluminum coated member can be provided in which the alumina thin film is unified with an aluminum or copper substrate for radiating heat.

### BRIEF DESCRIPTION OF THE DRAWINGS:

Fig. 1 is a sectional view which schematically illustrates a semiconductor device;
Fig. 2 is a schematic view illustrating an alumina-crystal-particle-dispersed alumina sol of the invention;
Fig. 3 is a flowchart showing a method according to the invention for producing an alumina-crystal-particle-dispersed alumina sol;
Fig. 4 is a graph showing a relationship between a specific surface area of alumina particles and a particle diameter thereof;
Fig. 5 is a flowchart showing a method for producing an alumina-crystal-particle-dispersed alumina sol in Example 1;
Fig. 6A is a graph showing results obtained by measuring an alumina sol produced in Example 1 through a TG-DTA;
Fig. 6B is a graph showing results obtained by measuring an alumina sol produced in Comparative Example 1 through the TG-DTA;
Fig. 7 is a graph showing XRD patterns for clarifying a crystallization temperature of an alumina-crystal-particle-dispersed alumina sol of the invention;
Fig. 8 is an SEM image showing a cross section of an alumina thin film obtained by painting the alumina-crystal-particle-dispersed alumina sol in Example 1 onto a substrate, and then drying the resultant;
Fig. 9 is a graph showing an XRD pattern obtained in the case of subjecting a seed-crystal-added alumina sol in each of Example 2 and Comparative Example 2 to a thermal treatment at 900°C; and
Fig. 10 is a graph showing an XRD pattern obtained in the case of subjecting the alumina sol of each of Examples 1 and 2 to the thermal treatment at 900°C.

### DESCRIPTION OF THE PREFERRED EMBODIMENTS:

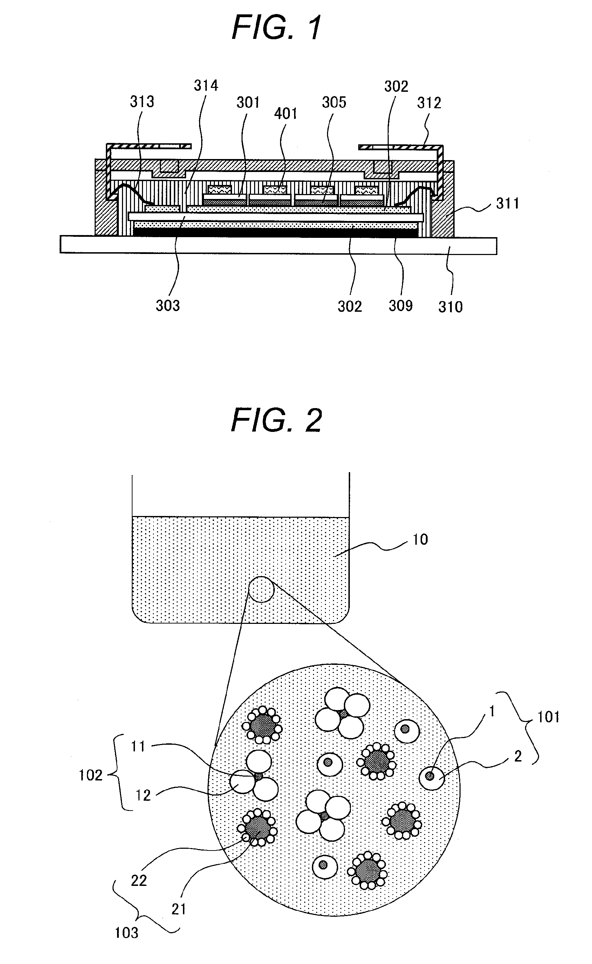

Fig. 1 is a view which schematically illustrates a semiconductor device used in an inverter or some other.

In this figure, each semiconductor element 301 is set to an insulating substrate 303 (made of a ceramic material) having an interconnection layer 302 made of a conductor. The semiconductor element 301 is joined through a solder layer 305 onto the interconnection layer 302. Furthermore, the insulating substrate 303 is joined through a solder layer 309 onto a surface of a metal substrate 310 for radiating heat. The members are covered with a case 311. External terminals 312 are fitted to the case 311. The interconnection layer 302 is electrically connected to each of the external terminals 312 through a bonding wire 313. A sealing material 314 is filled into a gap between the case 311, and the semiconductor elements 301 and the others. The semiconductor elements 301 each have a terminal 401 for connection.

If the insulating substrate 303 can be joined to the surface of the metal substrate 310 without using the solder layer 309 interposed therebetween, the resultant is desired from the viewpoint of production costs therefor and the entire weight of the device.

When the metal substrate 310 (hereinafter referred to also as the "substrate") is made of copper, aluminum or the like, and the insulating substrate 303 is formed directly onto the surface of the metal substrate 310, it is necessary to form the insulating substrate 303 onto the surface of the metal substrate 310 at low temperature. The melting point of copper is 1083°C and that of aluminum is 660°C. Thus, the temperature for forming the insulating substrate 303 is desirably 1000°C or lower, more desirably 600°C or lower. A member in which the insulating substrate 303 is directly formed onto the surface of the metal substrate 310 is to be referred to as an "aluminum coated member".

The alumina-crystal-particle-dispersed alumina sol of the invention is a sol including colloidal particles of aluminum hydroxide, and crystalline particles of aluminum oxide, and can be obtained by dissolving an aluminum salt into water as a solvent to prepare an aqueous solution of the aluminum salt; adding urea to the aqueous solution of the aluminum salt to be dissolved into the solution; heating the solution to produce a precipitation of aluminum hydroxide; and then using a deflocculant to deflocculate the precipitation.

The colloidal particles may include a pseudo-boehmite or an amorphous. As described above, the colloidal particles have been defined as colloidal particles of aluminum hydroxide; however, "aluminum hydroxide" referred to herein may not be aluminum hydroxide in a strict sense, and may be therefore aluminum hydroxy oxide, such as boehmite. In the present specification, the term "aluminum hydroxide" is used as a term for naming the substances collectively.

The crystalline particles of aluminum oxide appear to be bonded to the colloidal particles, as will be detailed later. Thus, aluminum oxide may not be aluminum oxide in a strict sense, either. In the specification, the term "aluminum oxide" is used as a term corresponding to crystalline particles.

The average particle diameter of the colloidal particles is desirably from 1 to 10 nm. The average particle diameter of the crystalline particles is desirably from 0.1 to 10 nm. If the average particle diameter of each of the particle species is more than 10 nm, at the time of using the alumina-crystal-particle-dispersed alumina sol of the invention to produce a thin film having a thickness of about 100 nm the thin film does not easily become even. Thus, the front surface of the thin film may not be smooth.

The crystalline particles may include α or γ alumina.

A seed crystal may be blended into the alumina-crystal-particle-dispersed alumina sol of the invention.

The average particle diameter of the seed crystal is desirably from 1 to 10 µm.

The aluminum coated member of the invention is a member obtained by painting the above-mentioned alumina-crystal-particle-dispersed alumina sol on a surface of a substrate, and then subjecting the resultant to drying treatment or firing treatment. The film formed on the substrate surface in this way is called the "alumina film".

The temperature for the firing is desirably lower than 600°C. In the case of alumina, the temperature is particularly desirable.

The temperature for the firing is desirably from 600 to 900°C. In the case of copper, the temperature range is allowable.

The temperature for the firing may be a temperature higher than 900°C. In the case of copper, however, the temperature is desirably 1000°C or lower.

The alumina film includes pseudo-boehmite, γ alumina or α alumina.

When the sol does not contain any seed crystal, the thickness of the alumina film is desirably 300 nm or less.

Contrarily, when the sol contains a seed crystal, it is desired that the thickness of the alumina film is larger than the average particle diameter of the seed crystal. If this matter is not satisfied, the front surface of the alumina film (thin film) may not be unfavorably smooth.

Hereinafter, embodiments of the invention will be specifically described.

Fig. 2 is a schematic view illustrating an alumina-crystal-particle-dispersed alumina sol of the invention. Hereinafter, the alumina-crystal-particle-dispersed alumina sol may be referred to merely as the "alumina sol".

In Fig. 2, the alumina-crystal-particle-dispersed alumina sol, which is an alumina sol 10 in a liquid form, is partially enlarged and illustrated. Colloidal particles dispersed in the alumina sol are roughly classified into three types. However, the form of the colloidal particles illustrated in this figure is schematically illustrated. The form of colloidal particles that constitute the alumina sol of the invention is not limited to the types.

Hereinafter, a description will be made about the colloidal particles of the three types.

A colloidal particle 101 has such a form that an alumina particle 1 (crystalline particle) is embraced in an amorphous particle 2. A colloidal particle 102 has such a form that plural amorphous particles 12 gather around an alumina particle 11 (crystalline particle). A colloidal particle 103 has such a form that plural amorphous particles 22 having a small particle diameter adhere to the circumference of an alumina particle 21 (crystalline particle) having a relatively large particle diameter.

In the present specification, the "particle diameter" means the diameter of the particle.

### Method for Producing Alumina Sol:

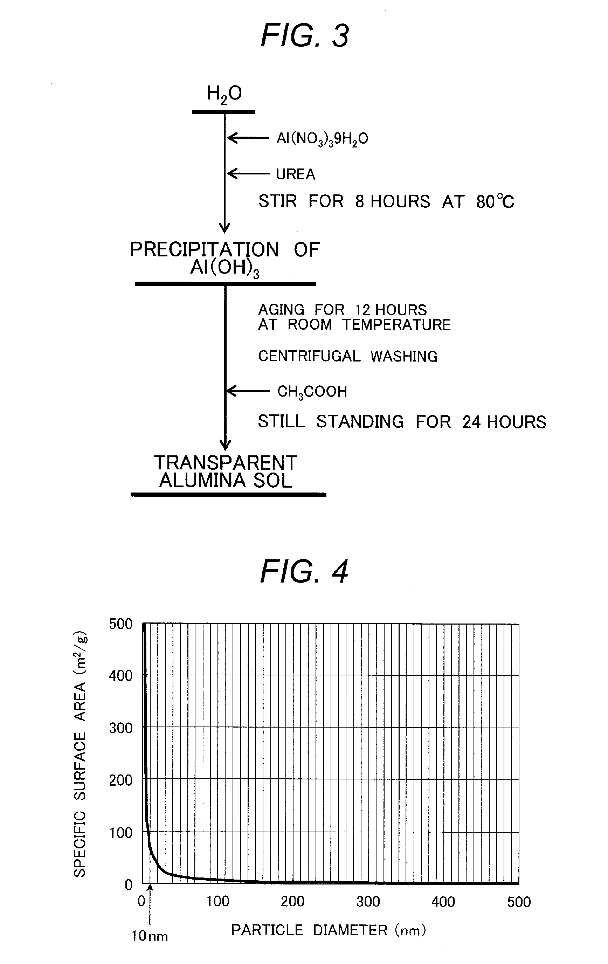

Fig. 3 is a flowchart showing an example of a method according to the invention for producing an alumina sol.

First, aluminum nitrate nonahydrate (Al(NO₃)₃·9H₂O) which is an example of the aluminum salt is dissolved into water, and thereto is then added urea. The resultant solution is stirred at 80°C for 8 hours (8 h) to yield a precipitation of Al(OH)₃.

It is preferred to use aluminum nitrate or aluminum acetate as the aluminum salt. This is because even if nitrate ions or acetate ions remain as an impurity in an alumina film obtained after an alumina sol which is to be finally obtained is fired, the effect of the impurity is small onto the pressure resistance and other properties of the film. For the preparation of the alumina sol, aluminum chloride, aluminum sulfate or the like is usable. However, when the compound remains as a residue after the firing, the pressure resistance and the other properties are unfavorably lowered.

The concentration of the aluminum salt (aluminum nitrate) is preferably from 0.1 to 0.5 M in the terms of the concentration of aluminum ions. When aluminum nitrate is used, a concentration of the salt that is more than 0.5 M results in an inconvenience that the concentration of nitrate ions is large relatively to a urea concentration (to be detailed later) of 3 to 6 M. By the effect thereof, the hydrogen ion exponent (pH) does not rise so that a precipitation of Al(OH)₃ comes not to be generated. Thus, such a concentration is irrelevant. If the concentration of aluminum nitrate is less than 0.1 M, the production amount of the precipitation is small so that the sol is unfavorably declined in production efficiency.

The symbol "M" represents mol/L (mole/liter), which is a unit of molar concentration. The molar concentration represents the mole number of a solute in one liter of a solution. For example, the numerical range of "0.1 to 0.5 M" denotes the same range as the wording "0.1 M or more and 0.5 M or less".

An additive to be added to obtain the precipitation of Al(OH)₃ may be urea. The addition of urea gives an even precipitation of Al(OH)₃ in fine forms. The use of urea makes the precipitation formation speed of Al(OH)₃ far smaller than that of NH₃ or some other compound used in the prior art. By making the precipitation formation speed of Al(OH)₃ small in this way, an even precipitation of Al(OH)₃ in fine forms can be produced. A reagent other than urea, for example, hexamethylenetetramine is usable.

The concentration of urea added is preferably from 3 to 6 M. If the concentration of urea is more than 6M, the pH rises suddenly; thus, the concentration is unsuitable for the production of fine particles. If the concentration is less than 3 M, the pH does not rise sufficiently; thus, the precipitation is not unfavorably produced.

In the example shown in Fig. 3, in the synthesis for yielding the precipitation of Al(OH)₃, the temperature and the period are set to 80°C and 8 hours, respectively. However, the temperature and the period are not limited thereto. The temperature is preferably from 60 to 100°C since the range is a temperature range including the hydrolysis temperature of urea, and thereabouts. The period for the synthesis is preferably from 8 to 9 hours in order that the pH can be adjusted into 6.5 or thereabouts.

Next, the system is allowed to stand still for 12 hours to age the precipitation, and then the system is subjected to centrifugal washing. Thereafter, acetic acid is added thereto to deflocculate Al(OH)₃. In this way, an alumina sol is obtained. The purpose of performing the centrifugal washing is for removing remaining urea or ammonia. The period for the standing-still is preferably from 12 to 15 hours. If the period is longer than 15 hours, the precipitation crystallizes to aggregate so as not to be easily deflocculated with the deflocculant. If the period is shorter than 12 hours, the precipitation does not crystallize sufficiently so as to be kept as a highly viscous precipitation having a gel network structure. Thus, the particle size of the precipitation particles is large. In this case, therefore, the precipitation is not easily deflocculated with the deflocculant, either.

The deflocculant may be any substance as far as the substance is an organic substance having a carboxylate group (carboxyl group) [i.e., a carboxylic acid]. The deflocculant is in particular preferably acetic acid. Since acetic acid is low in boiling point to be easily decomposed, the acid does not easily remain as a residue at the time of the firing into the alumina thin film.

The dropping amount of acetic acid is adjusted to set the ratio by mole of CH₃COOH/Al³⁺ preferably in the range of 0.10 to 0.50, in particular preferably in that of 0.15 to 0.20. If the amount is adjusted to set the ratio to less than 0.15, the deflocculation is not sufficiently caused so that the synthesis system becomes cloudy. If the amount is adjusted to set the ratio to more than 0.20, the added amount of acetic acid becomes large so that the amount of impurities other than a precipitation of Al(OH)₃ unfavorably becomes large.

Other examples of the deflocculant include hydrochloric acid, nitric acid and sulfuric acid. The above-mentioned carboxylic acid may be of various types, and examples thereof include citric acid, propionic acid, and malic acid.

The resultant alumina sol is characterized by being an alumina sol containing an amorphous having an average particle diameter of 1 to 10 nm and crystalline particles (α, γ) having an average particle diameter of 0.1 to 10 nm. The sol contains the crystalline particles, whereby the particles function as starting points of the crystallization of the sol so that the crystallization temperature can be lowered. The crystalline particles may be of either a γ type or an α type.

The amorphous referred to herein denotes colloidal particles constituting the sol, or a component having substantially the same structure as the particles. The amorphous may be bonded to α alumina or γ alumina which is made of crystalline particles. In the specification, the amorphous is distinguished from any one of the crystalline particles as a constituent element. In other words, the crystalline particle which is a nucleus for any particle of the amorphous is not included in the category of the amorphous.

The method of the invention is characterized in that crystalline particles are dispersed in an alumina sol obtained by deflocculating Al(OH)₃ with an organic acid such as acetic acid and then allowing the resultant deflocculated-product-containing system to stand still. The method makes it possible to produce fine crystalline particles having a particle diameter of 10 nm or less. By allowing the alumina sol to stand still to promote the crystallization of the sol gradually, fine crystalline particles having a particle diameter of 10 nm or less can be produced.

Fig. 4 is a graph showing a relationship between the specific surface area of alumina particles and the particle diameter thereof.

As shown in the graph, when the particle diameter turns to 10 nm or less, the specific surface area increases abruptly. As described above, the reason why the particle diameter of the amorphous alumina particles is set to 10 nm or less is that the particles increase abruptly in the specific surface area to increase starting points for crystallization when the particle diameter turns to 10 nm or less.

By the production of the fine crystalline particles (crystal particles) having a particle diameter of 10 nm or less, the crystallization temperature for the conversion into the α type is lowered into about 600°C which has been ordinarily unable to be attained. The reason why such a use of crystal particles having a smaller particle diameter makes the crystallization temperature low is that the total surface area of the crystalline particles becomes large to increase starting points for crystallization of alumina.

In order to attain a further promotion of the crystallization of the sol in a thermal treatment of the alumina sol produced by the procedure shown in Fig. 3, crystalline alumina particles may be beforehand added thereto. The particles may be crystalline particles of an α or γ type.

The alumina sol of the invention is also characterized that the particle diameter thereof is even and microscopic. The characteristic makes it possible to yield a dense film after the sol is fired.

### EXAMPLES

Hereinafter, the invention will be specifically described by way of working examples.

### Example 1:

### [Production of Alumina Sol]

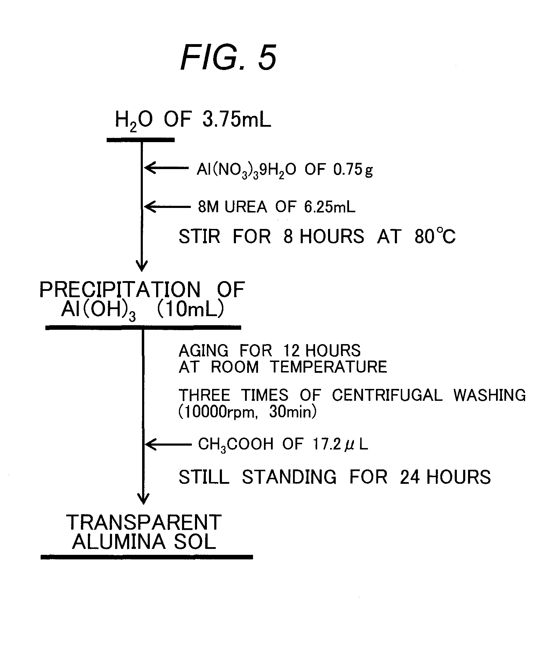

Fig. 5 is a flowchart showing an example of an actual method for producing an alumina-crystal-particle-dispersed alumina sol.

As illustrated in Fig. 5, 3.75 mL of water (H₂O) was first prepared. Thereto were added 0.750 g of aluminum nitrate nonahydrate (Al(NO₃)₃·9H₂O) and 6.25 mL of an 8-M solution of urea in water, and then the resultant solution was stirred at 80°C for 8 hours to yield a precipitation of Al(OH)₃.

Next, the present system was allowed to stand still at room temperature for 12 hours, and then subjected to centrifugal washing at 10000 rpm for 30 minutes three times to take out a precipitation of Al(OH)₃. To the precipitation was added 17.2 µL of CH₃COOH as a deflocculant. The present system was allowed to stand still for 24 hours to prepare a transparent alumina sol.

The particle diameter of the transparent alumina sol was measured by means of a transmission electron microscope (TEM, JEM-2100 manufactured by JEOL Ltd.), and a dynamic light scattering system (DLS, Zetasizer Nano ZS90 manufactured by Malvern Instruments Ltd. The TEM demonstrated crystalline particles having a particle diameter of about 66.7 nm or less. The DLS demonstrated even amorphous particles having an average particle diameter of 3.62 nm.

From the results, it has been understood that the use of urea as performed in the invention makes it possible to produce a mixture of even and fine crystalline particles and amorphous particles. This is because the use of urea makes it possible to give even and fine particles of Al(OH)₃. It can be considered that the formation of the even and fine particles of Al(OH)₃ makes it possible to produce a fine-particle-containing and even alumina sol after subsequent deflocculating treatment.

### Comparative Example 1:

For comparison, an alumina sol was produced by a method using a metal alkoxide described in Non-Patent Document 2.

First, 30 mL of H₂O was prepared. Thereafter, thereto was added 3.404 g of Al[OCH(CH₃)₂], and the resultant system was stirred at 80°C for 1 hour to yield a precipitation of Al(OH)₃. Next, 143.5 µL of CH₃COOH was added, as a deflocculant, to the precipitation, and then the system was allowed to stand still at 80°C for 8 hours to prepare the alumina sol. The average particle diameter of the resultant sol was measured by means of the DLS. As a result, the average particle diameter was 28 nm.

### [Crystallization Temperatures of Alumina Sols]

Next, the respective crystallization temperatures of the alumina sols produced in Example 1 and Comparative Example 1 were examined.

The crystallization temperatures were measured, using a TG-DTA (TG8120, manufactured by Rigaku Corp.). About conditions for the measurement, the temperature-raising rate was set to 10°C/min, and an atmosphere used therefor was the atmosphere.

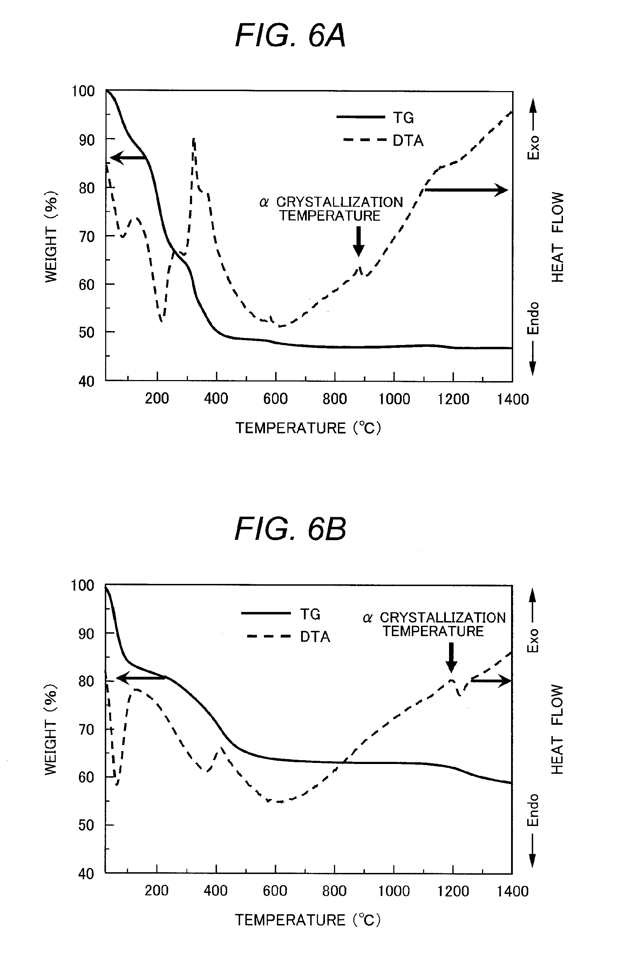

Fig. 6A is a graph showing results of the alumina sol produced in Example 1; and Fig. 6B a graph showing results of that produced in Comparative Example 1. Their transverse axis represents the temperature of the sample concerned. Their left vertical axis represents the weight of the sample when the initial weight thereof was regarded as 100%. Their right vertical axis represents the heat flow therefrom. It is demonstrated that as the heat flow is larger, the quantity of generated heat is larger. A curve represented by a solid line in each of the graphs shows a change in the weight while a curve represented by a broken line therein shows a change in the heat flow.

In Fig. 6A, it is understood from an exothermic heat in the flow rate change therein that the α crystallization temperature is 900°C. In Fig. 6B, it is understood that the α crystallization temperature is 1200°C. From the results, it is presumed that about the alumina sol produced in Example 1, the crystallization temperature is declined since the sol contains the crystalline particles in a large proportion. The decline is based on a matter that the crystalline particles function as starting points for crystallization.

In order to examine the crystallization process of the alumina sol in Example 1 in detail, respective XRD patterns of samples of the sol were measured after the samples were subjected to thermal treatment at respective temperatures of 25 to 900°C.

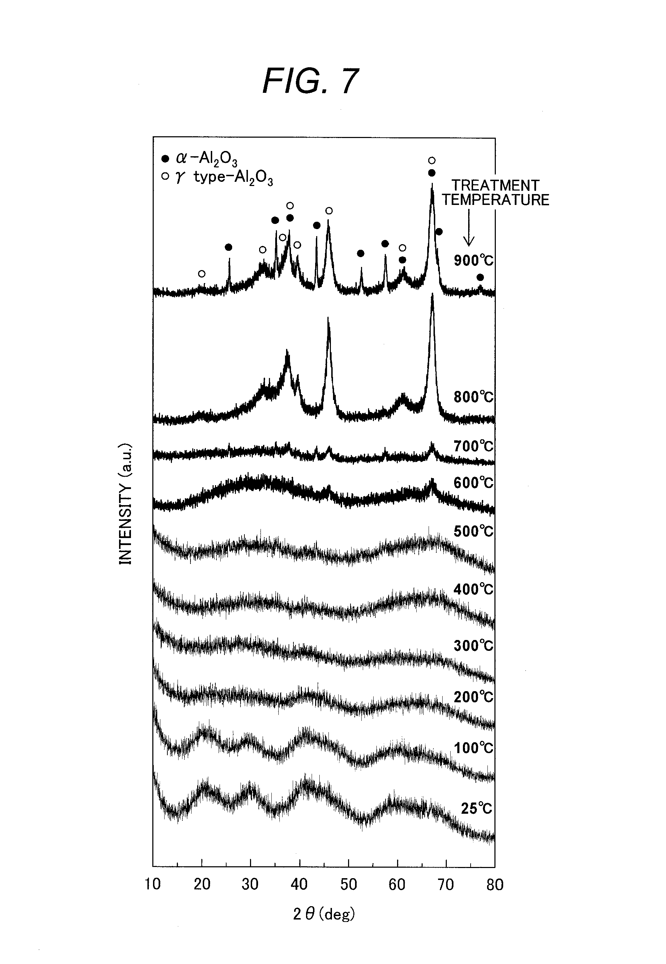

Fig. 7 shows the results.

About the samples treated at 25°C and 100°C, respectively, broad peaks were observed at 20°, 30°, 40°, and 60°, respectively. The peaks were based on pseudo-boehmite. The peaks are based on pseudo-boehmite structure. About the samples treated at the respective temperatures of 200°C to 500°C, no clear peak was observed. Thus, it is presumed that an amorphous as well as pseudo-boehmite was produced. About the samples treated at the respective temperatures of 600°C to 800°C, a peak of γ type alumina was observed, and at 900°C a peak of α type alumina made its appearance.

From the results, it can be verified that the crystallization temperature for the conversion into the γ type is lowered by about 300°C from 900°C which is an ordinary crystallization temperature. It has been therefore understood that the presence of fine alumina crystal grains in an alumina sol attains a lowering not only in the crystallization temperature for the conversion into the α crystal but also in the crystallization temperature for the conversion into the γ crystal.

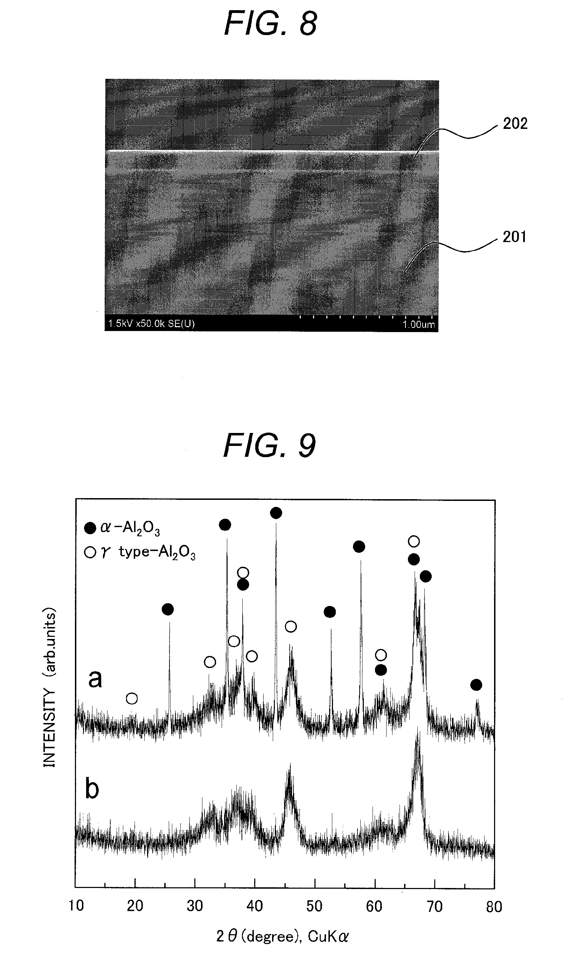

Fig. 8 shows an image obtained by photographing, through a scanning electron microscope (SEM, S4800 manufactured by Hitachi Ltd.), a cross section of a product obtained by painting the alumina sol in Example 1 onto a surface of a glass substrate 201, and allowing the resultant to stand still at room temperature for 24 hours to make the sol into a gel state.

As shown in this figure, the thus obtained alumina thin film, which is represented by reference number 202 and formed on the glass substrate 201, was even and dense. It is believed that this is because alumina particles and amorphous particles constituting the produced alumina sol were even and fine particles. The thickness of the alumina thin film 202 was about 200 nm.

Furthermore, by heating the thin film at 600°C for 1 hour, a crystal film of γ alumina can be obtained. By heating the thin film at 900°C for 1 hour, a crystal film of α alumina can be obtained.

The glass substrate 201 coated with the alumina thin film 202 in this way can be called an aluminum coated member as a whole.

In the present example, the glass substrate was used as the substrate. However, the substrate is not limited thereto. Thus, a substrate made of a metal such as copper or aluminum may be used.

It has been understood from a combination of the above-mentioned results with each other that the alumina sol of the invention, which contains fine crystalline particles, has a temperature for the conversion (crystallization temperature) into α alumina which is lower than any conventional alumina species by 150°C or more. Example 2 and Comparative Example 2:

### [Advantageous Effect Based on Varied Particle Diameters of Alumina Sol]

A comparison was made between the advantageous effect of a seed crystal into an alumina sol according to a conventional method and that of a seed crystal into an alumina sol of the invention.

Crystal seeds were added, respectively, to the alumina sols produced in Comparative Example 1 and Example 1, and then the respective crystallization temperatures of the resultants were compared with each other. The seed crystals used therein were each α alumina having a particle diameter of 5 µm (manufactured by Kanto Chemical Co., Inc.) as a seed crystal example. Example 2 was an example wherein the seed crystal was added to Example 1. Comparative Example 2 was an example wherein the seed crystal was added to Comparative Example 1. A product obtained by adding, to the alumina sol of each of the examples, α alumina to give a concentration of 0.5% by mole was subjected to thermal treatment.

Fig. 9 is a graph showing an XRD pattern obtained in the case of subjecting the seed-crystal-added alumina sol in each of Example 2 and Comparative Example 2 to the thermal treatment at 900°C. In this graph, "a" represents Example 2; and "b" Comparative Example 2.

According to the graph, crystallization for the conversion into the α type can be verified in Example 2. By contrast, crystallization for the conversion into the α type cannot be verified in Comparative Example 2. It is presumed that this is because the particle diameter of the alumina sol is as large as 28 nm in Comparative Example 2 so that the number of starting points for the crystallization is small not to lower the crystallization temperature. From this result, it has been understood that when the alumina sol particle diameter is as large as 28 nm, the sol is not largely lowered in crystallization temperature even by the addition of a seed crystal thereto. Examples 1 and 2:

### [Advantageous Effect of Addition of Seed Crystal to Alumina Sol]

By comparing the alumina sols of Examples 1 and 2 described above with each other, an advantageous effect of the addition of the seed crystal was examined.

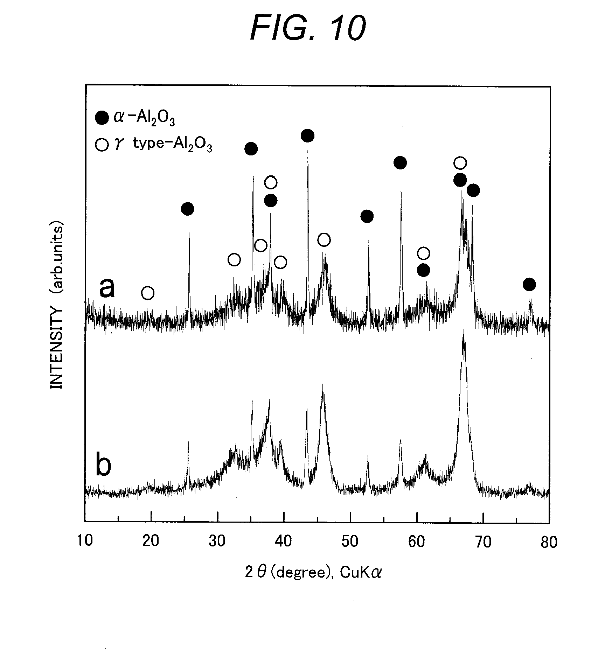

Fig. 10 is a graph showing an XRD pattern obtained in the case of subjecting the alumina sol of each of Examples 1 and 2 to thermal treatment at 900°C. In the graph, "a" represents Example 2; and "b" Example 1.

The graph demonstrates that in Example 2, the proportion of the sol crystallized for the conversion into the α type is larger than in Example 1. Thus, it has been understood that the addition of crystalline alumina particles (seed crystal) into a produced alumina sol produces an advantageous effect of promoting crystallization for the conversion into the α type.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A method for producing an alumina-crystal-particle-dispersed alumina sol that is a sol comprising colloidal particles of aluminum hydroxide, and crystalline particles of aluminum oxide, the method comprising the steps of:
dissolving an aluminum salt into water as a solvent to prepare an aqueous solution of the aluminum salt;
adding urea to the aqueous solution of the aluminum salt to be dissolved into the solution;
heating the solution to produce a precipitation of aluminum hydroxide; and
deflocculating the precipitation by adding a deflocculant thereto.

2. The method for producing the alumina-crystal-particle-dispersed alumina sol according to claim 1, wherein the colloidal particles include a pseudo-boehmite or an amorphous.

3. The method for producing the alumina-crystal-particle-dispersed alumina sol according to claim 1, wherein
the deflocculant is an organic material having a carboxylate group.

4. The method for producing the alumina-crystal-particle-dispersed alumina sol according to claim 1, wherein
the deflocculant is acetic acid.

5. The method for producing the alumina-crystal-particle-dispersed alumina sol according to claim 1, wherein
the aluminum salt is aluminum nitrate or aluminum acetate.

6. The method for producing the alumina-crystal-particle-dispersed alumina sol according to claim 1, the method further comprising a step of
adding a seed crystal to the sol after deflocculating the precipitation.

7. An alumina-crystal-particle-dispersed alumina sol comprising:
colloidal particles of aluminum hydroxide; and
crystalline particles of aluminum oxide,
wherein the colloidal particles have an average particle diameter of 1 to 10 nm, and the crystalline particles have an average particle diameter of 0.1 to 10 nm.

8. The alumina-crystal-particle-dispersed alumina sol according to claim 7, wherein
the colloidal particles include a pseudo-boehmite or an amorphous.

9. The alumina-crystal-particle-dispersed alumina sol according to claim 7, wherein
the crystalline particles include α alumina or γ alumina.

10. The alumina-crystal-particle-dispersed alumina sol according to claim 7, further comprising a seed crystal.

11. The alumina-crystal-particle-dispersed alumina sol according to claim 10, wherein
the seed crystal has an average particle diameter of 1 to 10 µm.

12. An aluminum coated member comprising:
a substrate; and
an alumina film with which at least a part of the substrate is coated,
wherein the alumina film is a film obtained by painting the alumina-crystal-particle-dispersed alumina sol recited in any one of claims 7 to 11 to the substrate, and subjecting the resultant to drying treatment.

13. An aluminum coated member comprising:
a substrate; and
an alumina film with which at least a part of the substrate is coated,
wherein the alumina film is a film obtained by painting the alumina-crystal-particle-dispersed alumina sol recited in any one of claims 7 to 11 to the substrate, and subjecting the resultant to firing treatment.

14. The aluminum coated member according to claim 13, wherein
a temperature for the firing treatment is lower than 600°C.

15. The aluminum coated member according to claim 13, wherein
a temperature of the firing treatment is from 600 to 900°C.

16. The aluminum coated member according to claim 13, wherein
a temperature of the firing treatment is higher than 900°C.

17. The aluminum coated member according to any one of claims 12 to 16, wherein
the alumina film includes a pseudo-boehmite, γ alumina or α alumina.

18. An aluminum coated member comprising:
a substrate; and
an alumina film with which at least a part of the substrate is coated,
wherein the alumina film is a film obtained by painting the alumina-crystal-particle-dispersed alumina sol recited in any one of claims 7 to 9 to the substrate, and subjecting the resultant to drying treatment or firing treatment, and
the alumina film has a thickness of 300 nm or less.

19. An aluminum coated member comprising:
a substrate; and
an alumina film with which at least a part of the substrate is coated,
wherein the alumina film is a film obtained by painting the alumina-crystal-particle-dispersed alumina sol recited in claim 10 or 11 to the substrate, and subjecting the resultant to drying treatment or firing treatment, and
the alumina film has a thickness larger than the average particle diameter of the seed crystal.

20. The aluminum coated member according to claim 13, wherein
the substrate includes copper or aluminum.
